**Europäisches Patentamt**

**European Patent Office**

**Office européen des brevets**

(11) Veröffentlichungsnummer: **0 320 771 B1**

(12) ## EUROPÄISCHE PATENTSCHRIFT

(45) Veröffentlichungstag der Patentschrift :
13.11.91 Patentblatt 91/46

(51) Int. Cl.⁵ : **B60R 19/26**

(21) Anmeldenummer : 88120435.8

(22) Anmeldetag : 07.12.88

(54) **Fahrzeug mit einer Fahrgastzelle und einer Energieumwandlungsvorrichtung.**

(30) Priorität : 17.12.87 DE 3742729

(43) Veröffentlichungstag der Anmeldung :
21.06.89 Patentblatt 89/25

(45) Bekanntmachung des Hinweises auf die
Patenterteilung :
13.11.91 Patentblatt 91/46

(84) Benannte Vertragsstaaten :
DE ES FR GB IT

(56) Entgegenhaltungen :
DE-A- 2 146 148
DE-A- 2 150 446
DE-B- 1 239 581
US-A- 1 339 756
US-A- 1 998 641

(73) Patentinhaber : **VOLKSWAGEN
AKTIENGESELLSCHAFT
W-3180 Wolfsburg (DE)**

(72) Erfinder : **Richter, Bernd, Dr.-Ing.
Berliner Ring 39
W-3171 Bokensdorf (DE)**
Erfinder : **Sinnhuber, Ruprecht, Dipl.-Ing.
Berliner Ring 25
W-3170 Gifhorn (DE)**
Erfinder : **Oehlschlaeger, Horst, Dr.-Ing.
Spitzwegstrasse 13
W-3300 Braunschweig (DE)**

## Beschreibung

Die Erfindung betrifft ein Fahrzeug mit einer Fahrgastzelle und einer Energieumwandlungsvorrichtung gemäß dem Oberbegriff des Patentanspruchs 1.

Zur Reduzierung der bei einem Fahrzeugunfall auftretenden Insassenbelastung werden in der Regel sowohl im Front- als auch im Heckbereich von Fahrzeugen Energieumwandlungsvorrichtungen vorgesehen, die bei einem Fahrzeugunfall die kinetische Energie des Fahrzeugs in mechanische Verformungsarbeit oder hydraulische Dämpfungsarbeit umwandeln. Diese oft auch Knautschzone genannten Energieumwandlungsvorrichtungen sind bislang so ausgelegt worden, daß die Verzögerung der Fahrgastzelle bei einem Fahrzeugunfall über dem Verformungsweg konstant bleibt oder sogar ansteigt. Diese Verzögerungscharakteristiken wirken sich auch auf Fahrzeuginsassen, die an ein Rückhaltesystem gekoppelt sind, nachteilig aus, weil nach einem Aufprall das Rückhaltesystem aufgrund der anfänglich niedrigen Verzögerungen relativ spät zu seiner vollen Wirkung kommt. Die Fahrzeuginsassen nehmen deshalb entsprechend spät an der Fahrgastzellenverzögerung teil und sind bei konstanter oder gar wachsender Verzögerung der Fahrgastzelle besonders verletzungsgefährdet, weil ihre kinetische Energie bei immer geringer werdender Verformungswegreserve der Energieumwandlungsvorrichtung über einen relativ langen Zeitraum hinweg sehr hoch ist.

Diese Nachteile vermeidet die gattungsbildende Anordnung nach der DE-A-2150446. Die dort vorgesehene Energieumwandlungsvorrichtung reduziert die Insassenbelastung bei einem Fahrzeugunfall durch eine günstige Verzögerungscharakteristik der Fahrgastzelle weitestgehend. Die beispielsweise vor der Fahrgastzelle angeordnete Energieumwandlungsvorrichtung führt nämlich im Moment des Aufpralls zu einem sprunghaften Anstieg auf den Maximalwert der Fahrgastzellenverzögerung und verringert diese anschließend weitestgehend gleichförmig über den restlichen Deformationsweg. Dieser fallende Verzögerungs-Weg-Verlauf für die Fahrgastzelle beteiligt die in einem Rückhaltesystem befindlichen Fahrzeuginsassen schon früh an der Fahrgastzellenverzögerung und setzt damit die Verletzungsgefahr erheblich herab. Diese vorteilhafte Verzögerungscharakteristik wird dadurch erreicht, daß die im wesentlichen quer zur Krafteinwirkungsrichtung gehaltene Energieumwandlungsvorrichtung nach dem Aufprall beidseitig von den im wesentlichen in Krafteinwirkungsrichtung ausgerichteten Knickstreben anfänglich nur mit relativ kleinen Kraftkomponenten beaufschlagt wird. Mit zunehmender Knickung der Knickstreben erhöhen sich auch die Beträge der auf die Energieumwandlungsvorrichtung wirkenden Kraftkomponenten, so daß der Verformungswiderstand des aus Energieumwandlungsvorrichtung und Knickstreben bestehenden Systems immer geringer wird. Das System besitzt also zum Zeitpunkt des Aufpralls einen großen Verformungswiderstand, der zu einer starken Verzögerung der Fahrgastzelle führt. Demzufolge sinkt mit der allmählichen Verringerung des Verformungswiderstandes auch die Fahrgastzellenverzögerung. Man erhält auf diese Weise also den gewünschten fallenden Verzögerungs-Weg-Verlauf für die Fahrgastzelle eines Fahrzeugs.

Bei dem zitierten Stand der Technik erstrecken sich die Knickstreben zwischen einem Stoßfänger und einer von Längsträgern des Fahrzeugs getragenen Traverse. Diese Anordnung ist insofern nachteilig, als die Längsträger zur Aufnahme der gesamten Stoßkräfte ausgebildet sein müssen.

Der Erfindung liegt demgemäß die Aufgabe zugrunde, ein gattungsgemäßes Fahrzeug unter Wahrung seiner beschriebenen Vorteile zu schaffen, bei dem durch die Energieumwandlungsvorrichtung die Trägeranordnung im Bereich des Vorder- oder Hinterwagens entlastet ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Verständlicherweise können auch mehrere Knickstrebenpaare die Energieumwandlungsvorrichtung beaufschlagen. Darüberhinaus ist eine Parallelbeaufschlagung mehrere Energieumwandlungsvorrichtungen denkbar. In Abhängigkeit von der Anordnung der Knickstellen können die Energieumwandlungsvorrichtungen mit Druck- oder Zugkräften beaufschlagt werden. Bereits diese Bemerkungen lassen erkennen, daß die Erfindung den Vorteil einer guten Anpassbarkeit an verschiedene Einsatzfälle bietet.

Das oben beschriebene System kann integrierter Bestandteil der Fahrzeugstruktur sein und sowohl im Vorderwagen- als auch im Heckbereich des Fahrzeuges angeordnet sein. Insbesondere bei Fahrzeugen mit Frontantrieb kann die Energieumwandlugnsvorrichtung vor oder hinter dem Fahrzeugaggregat angeordnet sein. Prinzipiell ist auch eine mehrteilige Ausführung der Energieumwandlungsvorrichtung denkbar, wobei das Fahrzeugaggregat dann zwischen einzelnen Elementen der Energieumwandlungsvorrichtung angeordnet sein kann. Die Energieumwandlung kann sowohl durch mechanische Verformung als auch durch hydraulische Drosselung erfolgen.

Die Verzögerungscharakteristik der Fahrgastzelle kann nachhaltig beeinflußt werden durch die Nachgiebigkeit der Energieumwandlungsvorrichtung einerseits und durch die Auswahl der Abmessungen des Knickstrebenverbandes andererseits. Bestimmend für die Nachgiebigkeiten des Knickstrebenverbandes sind die Längenverhältnisse der Knickstrebenschenkel, deren mit der Krafteinwirkungsrichtung eingeschlossener Winkel $\alpha$, sowie die Knickwinkel $\beta$ zwischen den Schenkeln in deren unverformter Ausgangsstellung. Eine für die Insassen günstige Fahrgastzellenverzögerung läßt sich in ihrer Charakteristik fahrzeugspezifisch durch eine sorgfältige Abstimmung aller Nachgiebigkeiten in Energieumwandlungsvorrichtung und Knickstrebenverband erzielen.

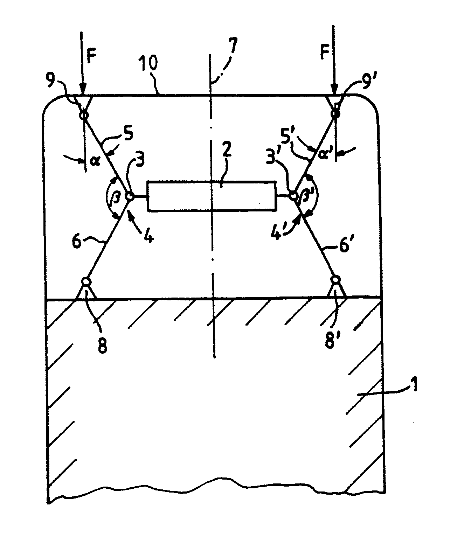

Zur Erläuterung der Erfindung ist in der Zeichnung ein Ausführungsbeispiel für ein Energieumwandlungssystem mit fallendem Verzögerungs-Weg-Verlauf für die Fahrgastzelle eines Fahrzeugs dargestellt. Man erkennt dort die Draufsicht eines schematisch dargestellten Fahrzeugbereiches mit einer Fahrgastzelle 1 und einer Energieumwandlungsvorrichtung 2, die über die Knickstellen 3 und 3' an den Knickstreben 4 und 4' angelenkt ist. Die Knickstrebe 4 besteht im wesentlichen aus den biegesteifen Schenkeln 5 und 6 und ist einerseits an dem Anlenkpunkt 8 der Fahrgastzelle 1 und andererseits an einem bei einem Fahrzeugunfall mit einer Kraft F beaufschlagten Bauteil an dem Anlenkpunkt 9 angelenkt. Die Anlenkung kann sowohl durch Drehgelenke als auch durch mechanisch leicht deformierbare Verbindungen erfolgen. Die biegesteifen Schenkel 5 und 6 schließen in ihrer Ausgangsstellung einen weitgestreckten Winkel $\beta$ ein und sind im wesentlichen in Krafteinwirkungsrichtung ausgerichtet. Mit dieser schließt mindestens einer der beiden Schenkel einen spitzen Winkel $\alpha$ ein. Die spiegelsymmetrisch zur Mittellinie 7 angeordnete Knickstrebe 4' gleicht der Knickstrebe 4 in Aufbau und Funktion.

Der Einfachheit halber wird die Wirkungsweise der oben beschriebenen Anordnung an der Knickstrebe 4 erläutert. Diese ist in ihrer Ausgangsstellung im wesentlichen in Krafteinwirkungsrichtung ausgerichtet und beaufschlagt daher im Moment des Aufpralls die Energieumwandlungsvorrichtung 2 über die Knickstelle 3 nur mit einer sehr geringen Kraftkomponente. Mit einer zunehmenden Knickung der Schenkel 5 und 6 infolge andauernder Krafteinwirkung vergrößert sich die auf die Energieumwandlungsvorrichtung 2 wirkende Kraftkomponente. Infolge dessen verringert sich bezogen auf die Kraft F der Verformungswiderstand des aus Energieumwandlungsvorrichtung 2 und Knickstreben 4 bzw. 4' bestehenden Energieumwandlungssystems. Dieses ist also zu Beginn sehr steif und führt zu einem nahezu sprungartigen Anstieg der Fahrgastzellenverzögerung. Die aus der weiter andauernden Krafteinwirkung resultierende Knickung der Schenkel 5 und 6 führt zu einer Verringerung des Verformungswiderstandes innerhalb des Energieumwandlungssystems, bis die Schenkel 5 und 6 bzw. 5' und 6' nahezu zur Anlage gekommen sind. Die Verringerung des Verformungswiderstandes setzt die Fahrgastzellenverzögerung herab und führt so zu dem für den Insassenschutz vorteilhaften Verzögerungs-Weg-Verlauf.

## Patentansprüche

1. Fahrzeug mit einer Fahrgastzelle (1) und mit wenigstens einer im wesentlichen quer zur Fahrtrichtung gehaltenen Energieumwandlungsvorrichtung (2), die bezüglich der bei einem Fahrzeugunfall auftretenden Krafteinwirkungsrichtung in einem vor der Fahrgastzelle (1) liegenden Fahrzeugbereich angeordnet ist, sowie mit wenigstens einem Paar von beiderseits der Energieumwandlungsvorrichtung (2) angeordneten Knickstreben (4, 4'), die im wesentlichen symmetrisch zu einer Mittelachse in Krafteinwirkungsrichtung ausgerichtet sind und jeweils wenigstens zwei biegesteife Schenkel (5, 6) aufweisen, die aus einer Ausgangsstellung heraus, in der sie einen relativ großen gestreckten Winkel zwischen sich einschließen, gegeneinander an Knickstellen (3, 3') verknickbar sind, wobei die Knickstellen (3, 3') an der Energieumwandlungsvorrichtung (2) und die einen freien Enden (Anlenkpunkte 9, 9') der Knickstreben (4, 4') an einem bei dem Fahrzeugunfall beaufschlagten Fahrzeugteil (10) angelenkt sind, dadurch gekennzeichnet, daß die anderen freien Enden (Anlenkpunkte 8, 8') der Knickstreben (4, 4') an der Fahrgastzelle (1) angelenkt sind.

2. Anordnung nach Anspruch 1, dadurch gekennzeichnet, daß die Energieumwandlungsvorrichtung am Fahrzeugaggregat befestigt ist.

3. Anordnung nach Anspruch 2, dadurch gekennzeichnet, daß die Energieumwandlungsvorrichtung mehrteilig gebildet ist, und daß das Fahrzeugaggregat zwischen den Teilen angeordnet ist.

4. Anordnung nach Anspruch 1, dadurch gekennzeichnet, daß die Energieumwandlungsvorrichtung vor oder hinter dem Fahrzeugaggregat angeordnet ist.

5. Anordnung nach Anspruch 1, dadurch gekennzeichnet, daß die Energieumwandlungsvorrichtung und die Knickstreben im Vorderwagenbereich des Fahrzeugs angeordnet sind.

6. Anordnung nach Anspruch 1, dadurch gekennzeichnet, daß die Energieumwandlungsvorrichtung und die Knickstreben im Heckbereich des Fahrzeugs angeordnet sind.

7. Anordnung nach den Ansprüchen 1 bis 6, dadurch gekennzeichnet, daß die Knickstreben integrierter Bestandteil der Fahrzeugstruktur sind.

8. Anordnung nach Anspruch 1, dadurch gekennzeichnet, daß die Energieumwandlungvorrichtung im wesentlichen aus wenigstens einem mechanischen Deformationselement gebildet ist.

9. Anordnung nach Anspruch 1, dadurch gekennzeichnet, daß die Energieumwandlungsvorrichtung im wesentlichen aus mindestens einem hydraulischen Dämpfungsglied gebildet ist.

10. Anordnung nach den Ansprüchen 1 bis 9, dadurch gekennzeichnet, daß Anlenkpunkte der Knickstreben und Energieumwandlungsvorrichtung durch Drehgelenke gebildet sind.

11. Anordnung nach den Ansprüchen 1 bis 9, dadurch gekennzeichnet, daß Anlenkpunkte der Knickstreben und Energieumwandlungsvorrichtung durch mechanisch leicht deformierbare Verbindungen gebildet sind.

## Claims

1. Vehicle having a passenger compartment (1) and having at least one energy conversion device (2) which is held substantially transversely to the direction of travel and, in relation to the direction in which forces act in the event of a vehicle accident, is disposed in a section of the vehicle lying in front of the passenger compartment (1), as well as having disposed on either side of the energy conversion device (2) at least one pair of buckling struts (4, 4'), which are aligned substantially symmetrically to a centre line in the direction in which forces act and each have at least two rigid limbs (5, 6), which may be buckled towards one another at buckling points (3, 3') out of a starting position in which they enclose between them a relatively wide angle, with the buckling points (3, 3') being hinged on the energy conversion device (2) and the one free ends (hinge points 9, 9') of the buckling struts (4, 4') being hinged on a vehicle part (10) which is stressed in the event of a vehicle accident, characterised in that the other free ends (hinge points 8, 8') of the buckling struts (4, 4') are hinged on the passenger compartment (1).

2. Arrangement according to claim 1, characterised in that the energy conversion device is fastened on the vehicle assembly.

3. Arrangement according to claim 2, characterised in that the energy conversion device is formed by a plurality of parts, and that the vehicle assembly is disposed between said parts.

4. Arrangement according to claim 1, characterised in that the energy conversion device is disposed in front of or behind the vehicle assembly.

5. Arrangement according to claim 1, characterised in that the energy conversion device and the buckling struts are disposed in the front section of the vehicle.

6. Arrangement according to claim 1, characterised in that the energy conversion device and the buckling struts are disposed in the tail section of the vehicle.

7. Arrangement according to claims 1 to 6, characterised in that the buckling struts are an integral part of the vehicle structure.

8. Arrangement according to claim 1, characterised in that the energy conversion device is basically formed by at least one mechanical deformation element.

9. Arrangement according to claim 1, characterised in that the energy conversion device is basically formed by at least one hydraulic damping element.

10. Arrangement according to claims 1 to 9, characterised in that the hinge points of the buckling struts and the energy conversion device are formed by swivel joints.

11. Arrangement according to claims 1 to 9, characterised in that the hinge points of the buckling struts and the energy conversion device are formed by mechanically easily deformable joints.

## Revendications

1. Véhicule comportant un habitacle (1) et au moins un dispositif (2) de transformation d'énergie qui est agencé essentiellement dans le sens transversal par rapport au sens de marche du véhicule et est disposé dans une partie du véhicule qui se trouve devant l'habitacle (1), eu égard au sens d'application des forces engendrées lors d'un accident du véhicule, et comportant également au moins une paire de jambes (4, 4') de flambage disposées de chaque côté du dispositif (2) de transformation d'énergie, qui sont orientées de façon essentiellement symétrique par rapport à un axe médian et dans le sens d'application des forces et comportent chacune au moins deux branches (5, 6) résistantes à la flexion qui, à partir d'une position initiale dans laquelle elles forment entre elles un angle obtus relativement grand, peuvent être pliées l'une sur l'autre au niveau des points (3, 3') de pliage, les points (3, 3') de pliage étant reliés au dispositif (2) de transformation d'énergie, et les extrémités libres (articulations 9, 9') des jambes (4, 4') de flambage étant articulées sur une partie (10) du véhicule qui est sollicitée lors de l'accident du véhicule, caractérisé par le fait que les autres extrémités libres (points 8, 8' d'articulation) des jambes (4, 4') de flambage sont articulées sur l'habitacle (1).

2. Système selon la revendication 1, caractérisé par le fait que le dispositif (2) de transformation d'énergie est fixé sur l'agrégat du véhicule.

3. Système selon la revendication 2, caractérisé par le fait que le dispositif (2) de transformation d'énergie est composé de plusieurs parties, et que l'agrégat du véhicule est disposé entre les parties.

4. Système selon la revendication 1, caractérisé par le fait que le dispositif (2) de transformation d'énergie est agencé devant ou derrière l'agrégat du véhicule.

5. Système selon la revendication 1, caractérisé par le fait que le dispositif (2) de transformation d'énergie et les jambes (4, 4') de flambage sont agencés dans la partie avant du véhicule.

6. Système selon la revendication 1, caractérisé par le fait que le dispositif (2) de transformation d'énergie et les jambes de flambage (4, 4') sont agencés dans la partie arrière du véhicule.

7. Système selon l'une des revendications 1 à 6, caractérisé par le fait que les jambes (4, 4') de flambage font partie intégrante de la structure du véhicule.

8. Système selon la revendication 1, caractérisé par le fait que le dispositif (2) de transformation d'énergie est constitué essentiellement d'au moins un élément mécanique déformable.

9. Système selon la revendication 1, caractérisé par le fait que le dispositif (2) de transformation d'énergie est constitué essentiellement d'au moins un élément amortisseur hydraulique.

10. Système selon l'une des revendications 1 à 9, caractérisé par le fait que des points d'articulation des jambes (4, 4') de flambage et du dispositif (2) de transformation d'énergie sont réalisés sous forme d'articulations à charnière.

11. Système selon l'une des revendications 1 à 9, caractérisé par le fait que des points d'articulation des jambes (4, 4') de flambage et du dispositif (2) de transformation d'énergie sont réalisés sous forme de jonctions facilement déformables mécaniquement.